# EUROPEAN PATENT SPECIFICATION

(11) **EP 1 375 308 B1**
(45) Date of publication and mention of the grant of the patent: **11.05.2005**
(21) Application number: 02380131.9
(22) Date of filing: 19.06.2002
(51) Int. Cl.: B62D 25/24

(54) **Plug for sealing orifices**
Verschlussdeckel zum Verschliessen von Öffnungen
Bouchon d'obturation pour ouvertures

(43) Date of publication of application: 02.01.2004
(73) Proprietor: I.T.W. Espana, S.A., 08520 Les Franqueses Del Valles (Barcelona) (ES)
(72) Inventor: Randez Perez, Jesus, 08520 Les Franqueses Del Valles (ES); Pares Isanta, Albert, 08520 Les Franqueses Del Valles (ES)
(74) Representative: Carpintero Lopez, Francisco

(56) References cited:
- ES-A- 2 125 148
- US-A- 4 363 420
- US-A- 4 801 040
- PATENT ABSTRACTS OF JAPAN vol. 015, no. 065 (M-1082), 15 February 1991 (1991-02-15) -& JP 02 293278 A (NIFCO INC), 4 December 1990 (1990-12-04)

## Description

### OBJECT OF THE INVENTION

The present invention relates to a plug that is specifically designed to close and seal an orifice of a plate, and that is particularly well suited for sealing orifices made in the body of an automobile.

The object of the invention is to obtain, on one hand, a correct and efficient closure or seal of the orifice involved, and in addition to achieve a perfect tightness and insulation between the inner and outer parts defined on either side of the orifice and thus of the sealant plug inserted in it.

### BACKGROUND OF THE INVENTION

Various forms are known for sealing orifices made in car body plates or in other elements. In this sense may be cited in first place Spanish invention patent ES2006404, which describes a plastic sealing lid for an opening of an automobile body plate, based on the lid including a peripheral sealing lip in an inclined arrangement and an elastic locking ring opposite said lip, so that the latter rests on the perimeter of the element or plate having the orifice in which the lid fits, while the locking ring rests on the bottom face of said plate or element in question. Likewise, this invention patent claims as one of its fundamental characteristics that provided beneath the locking ring is a support that can be embodied by another elastic lip, which presses against the locking ring to keep the latter permanently in contact with the corresponding surface of the element or plate in which the orifice is made that is sealed by the lid, in order to achieve a tight seal.

Although these types of seals are simple, it is obvious that the tightness is not always appropriate or optimal, due to the deformation or possible breakage of the support element and the locking ring.

In order to improve tightness of the seal, Spanish invention patent ES2097567 describes another elastic sealing lid that includes a heat-deformable gasket and lid anchoring lugs, although it is obvious that the gasket must be heated to provide an optimum seal.

According to the preamble of claim 1, Patent ES 2125148 discloses a plug for sealing orifices in plates, particularly designed to seal orifices made in plates such as those of automobile bodies, of the type comprising a pan-shaped body with a diverging peripheral outer flap derived from a neck formed by the pan-like form of the body and diverging outwards from said neck and a diverging peripheral inner flap at the opposite end of said neck to said outer flap. Diverging outwards from said neck, a plate is receivable between the inner surfaces of said flaps, wherein said neck is receivable in an orifice in the plate, and whereby a first ring of a melting material is provided on the inside of the outer peripheral flap, in order to provide a corresponding sealing area on the surface of the plate on which it is applied.

Likewise, Spanish utility model ES 1022542 describes a plug for an opening made in a plate that also incorporates a gasket or a cord with flexible glue that also melts with heat, as well as deformable flaps for anchoring in the assembly of the plug on the corresponding opening.

In every case, the problem shared by the aforementioned plugs is that none provides an acoustic or thermal seal, as well as providing a complex insertion as the deformable flaps, tabs or hooks incorporated in the various cases do not ensure an ideal reliability, as well as being complex.

To solve these drawbacks patents EP631923 and EP779203 describe corresponding sealing plugs provided with two sealing bands made of a melting material or glue, so that when the sealing plug is inserted in the orifice of the corresponding plate a first sealing area is established on the support of the external peripheral lip of the plug body on the upper surface of the plate, with the interposed glue or melting material and sealing, while a second sealing band is defined by a concentric ring provided on the neck of the sealing plug itself, so that in this case the seal is established between the orifice perimeter and the ring-shaped melting band or cord on the neck of the sealing plug, thereby providing an improved tightness and an optimum insulation between the two parts defined on either side of the orifice that is closed by the device described.

However, the drawbacks of the solutions described in EP631923 and EP779203 is that the glue or melting material is placed outside the body of the sealing plug, which causes problems during the assembly on the corresponding orifice as the cutting operation used to make the orifice produces a burr that will define the first area of contact when applying or introducing the sealing plug on said orifice, so that as the glue or melting material is soft when it meets the burr it will be "anchored" by said burr, which will require a specific form of assembly that is not always possible.

### DESCRIPTION OF THE INVENTION

The sealing plug object of the invention has been designed to solve the aforementioned drawbacks such that, based on the concept of defining a double seal on the orifice in which the plug is inserted, it is characterised in that the rings made of glue or melting material instead of being placed externally are placed internally. That is, the part that will comprise the sealing plug is formed with the plastic or melting material placed on its inside, thereby preventing any initial contact between the burr resulting from drilling the orifice and the soft melting material, to provide an easy, simple and efficient assembly as well as the aforementioned double sealing, as there will be on one hand a ring under the curved external peripheral flap of the sealing plug, and on the other a second ring that, as the first, is made of a melting material or glue and that is placed in a neck provided in the sealing plug, such that both rings can be joined by evenly spaced rings or may form a single piece.

In addition to the aforementioned advantage of the double sealing provided by the sealing plug of the invention and the specific arrangement of the rings that will provide said double sealing, also noteworthy is that an improved protection against rusting and an improved acoustic insulation will be obtained, as the thickness is increased of either the melting material layer or the non-melting material layer, that is, of the part that defines the sealing plug itself.

### DESCRIPTION OF THE DRAWINGS

As a complement of the present description and in order to aid a better understanding of the characteristics of the invention, in accordance with a preferred example of embodiment, an accompanying set of drawings is provided as an integral part of the description in which, for purposes of illustration only and in a non-limiting manner the following is shown:
Figure 1 shows a general perspective view of a sealing plug made according to the object of the invention, where the two rings that provide the double seal are joined to each other by ribs.
Figure 2 shows a plan view of the sealing plug of the previous figure.
Figure 3 shows a sectional view along the line A-A of the previous figure.
Figure 4 shows another sectional view, in this case along the line B-B of said figure 2.
Figure 5 shows another perspective view of the sealing plug of the invention in which the two sealing rings are joined to each other by a continuous material band forming a single body.
Figure 6 shows a diametric sectional view of the sealing plug shown in the previous figure.
Figure 7 shows, finally, a practical application of the sealing plug applied on an orifice of a plate, corresponding to the embodiment shown in figures 1 to 4.

### PREFERRED EMBODIMENT OF THE INVENTION

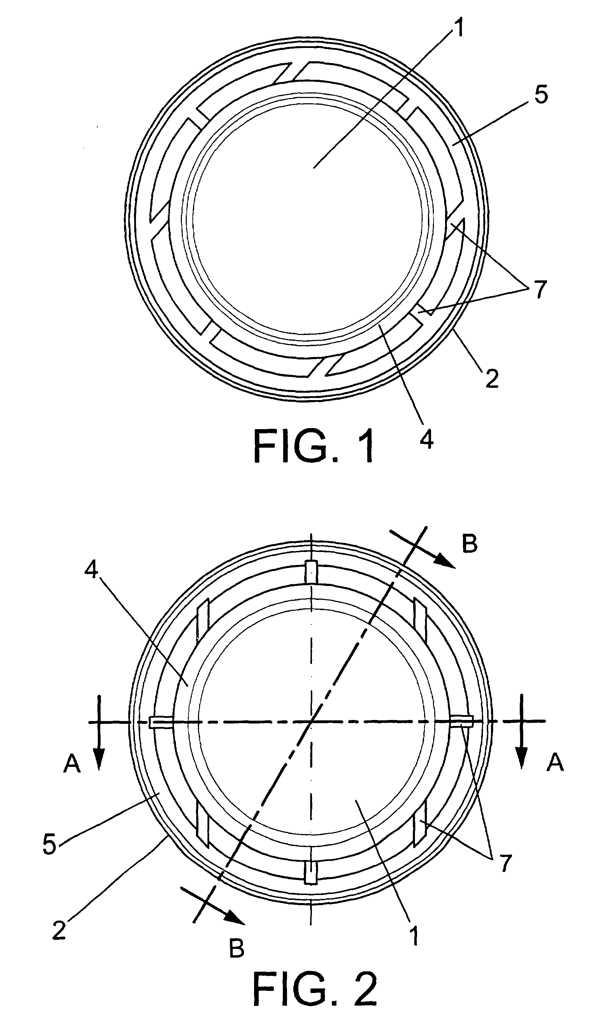

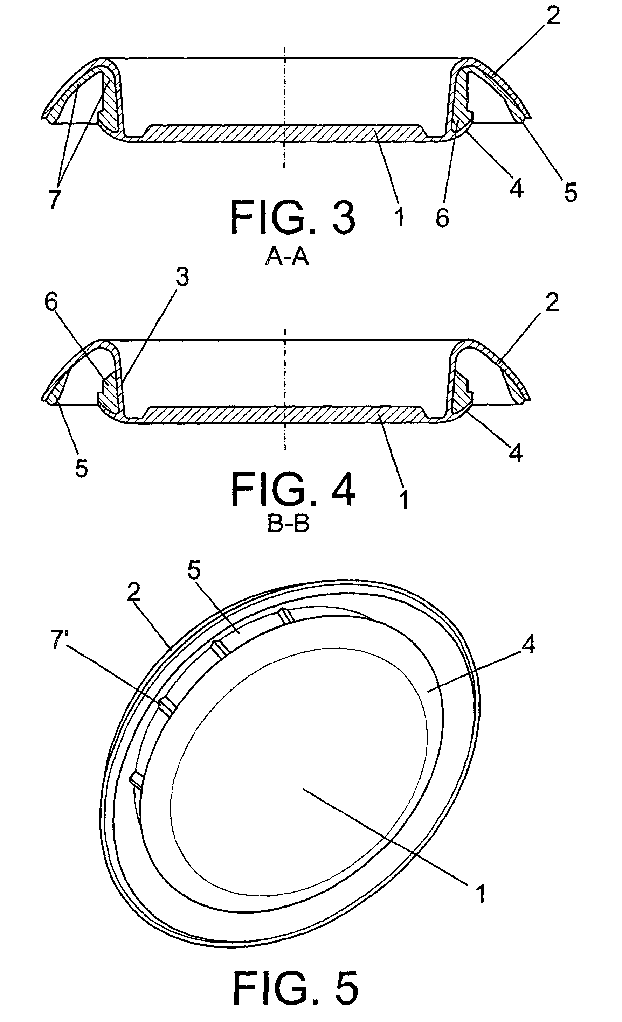

In view of the above described figures, and particularly of figures 1 to 4, it can be seen that the sealing plug of the invention is comprised of a pan-shaped body (1) made of a plastic semi-rigid material, in which is defined a peripheral flap (2) derived from the neck (3) formed by the pan-like form of the body (1) and, opposite the peripheral flap (2), a small flap (4) which, as the previous one, diverges outwards, with the two flaps oriented in opposite directions as is clearly shown in figures 3 and 4.

One of the main novelties of the invention is that the body (1) incorporates two rings (5) and (6) made of a melting material or glue, the first of which is placed in correspondence with the inner surface of the peripheral flap (2) and the second between the neck (3) and the flap (4).

These two rings (5) and (6) of melting material or glue can be joined to each other by ribs (7), as shown clearly in figures 1 and 2.

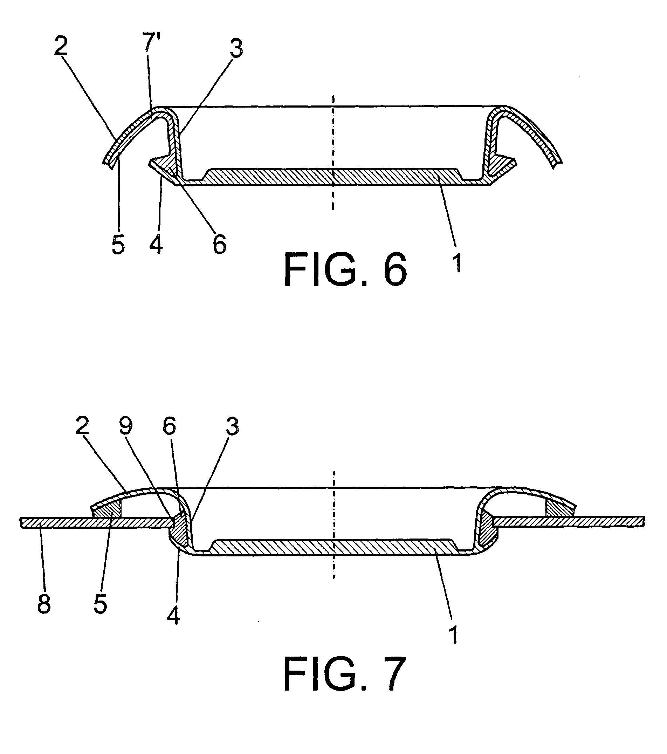

In an alternative embodiment shown in figures 5 and 6, the rings (5) and (6) of melting material or glue are joined to each other by a continuous band (7'), instead of the ribs (7) as mentioned before, which continuous band (7') determines together with the rings (5) and (6) an inner lining of the area comprised between the inner flap (4) and the neck (3), as well as a lining of all of said neck and the inner surface of the peripheral diverging flap (2), as clearly shown in figures 5 and 6.

Obviously, there may be any number of ribs (7) and in any configuration, and even when the ribs (7) are embodied as an intermediate continuous band (7') this band may be provided with corresponding ribs.

With the solution provided by the two embodiments described, the sealing plug of the invention can be easily assembled in its application on the orifice (9) of a plate (8), as represented in figure 7, which shows the support and sealing at two areas defined by the rings (5) and (6), in the first case resting on the surface of the plate (8) and in the second resting on the inner perimeter of the orifice (9), thereby achieving a double sealing and a perfect tightness and insulation of the two sides of the plate (8), or what is the same of the aforementioned sealing plug, all of this without any difficulty of assembly as the first contact in the assembly on the orifice (9) takes place without any contact with the rings (5) and (6), as they are placed under the flaps (2) and (4) of the sealing plug, thus allowing to perform the assembly in any position, without having to change said position.

## Claims

1. Plug for sealing orifices in plates, particularly designed to seal orifices made in plates such as those of automobile bodies, of the type comprising a pan-shaped body (1) with a diverging peripheral outer tlap (2) derived from a neck (3) formed by the pan-like form of the body and diverging outwards from said neck (3) and a diverging peripheral inner flap (4), at the opposite end of said neck (3) to said outer flap (2) and diverging outwards from said neck (3), a plate (8) being receivable between the inner surfaces of said flaps. wherein said neck (3) is receivable in an orifice (9) in the plate (8), and whereby a first ring of a melting material (5) such as glue, is provided on the inside of the outer peripheral flap (2), in order to provide a corresponding sealing areas on the surface of the plate (8) on which it is applied, **characterised in that** a second sealing ring of melting material (6) is provided on the inside of the inner flap (4) to provide a corresponding sealing area on the surface of the plate (8) on which it is applied, in order to enable assembly of the plug into the corresponding orifice (9) of the plate (8) without any initial contact between the soft material of the rings (5, 6) comprised of melting material and a burr formed when drilling the orifice (9).

2. Plug for sealing orifices, according to claim 1, **characterised in that** the two sealing rings (5) and (6) are joined to each other by ribs (7).

3. Plug for sealing orifices, according to claim 1, **characterised in that** the sealing rings (5) and (6) are joined to each other by a continuous band (7'), defining a continuous single body with said sealing rings (5, 6).

## Patentansprüche

1. Stopfen zum Abdichten von Öffnungen in Platten, der insbesondere zum Abdichten von Öffnungen in Platten, wie beispielsweise denen von Kraftfahrzeugkarosserien ausgeführt ist, von dem Typ, der einen schüsselförmigen Körper (1) mit einer auseinanderlaufenden Umfangs-Außenlasche (2), die von dem Hals (3) ausgeht, der durch die schüsselartige Form des Körpers gebildet wird, und von dem Hals (3) nach außen auseinander läuft, und einer auseinanderlaufenden Umfangs-Innenlasche (4) an dem der Außenlasche (2) gegenüberliegenden Ende des Halses (3) umfasst, die von dem Hals (3) nach außen auseinander läuft, wobei eine Platte (8) zwischen den Innenflächen der Laschen aufgenommen werden kann und der Hals (3) in einer Öffnung (9) in der Platte (8) aufgenommen werden kann und ein erster Ring aus einem schmelzenden Material (5), wie beispielsweise Klebstoff, an der Innenseite der Außenumfangslasche (2) vorhanden ist, um einen entsprechenden Dichtungsbereich an der Oberfläche der Platte (8) auszubilden, auf die sie aufgebracht wird, **dadurch gekennzeichnet, dass** ein zweiter Dichtungsring aus schmelzendem Material (6) an der Innenseite der Innenlasche (4) vorhanden ist, um einen entsprechenden Dichtungsbereich an der Oberfläche der Platte (8) zu schaffen, auf die sie aufgebracht wird, und Einsetzen des Stopfens in die entsprechende Öffnung (9) der Platte (8) ohne jeglichen anfänglichen Kontakt zwischen dem weichen Material der Ringe (5, 6), die aus schmelzendem Material bestehen, und einem Grat, der erzeugt wird, wenn die Öffnung (9) gebohrt wird, zu ermöglichen.

2. Stopfen zum Abdichten von Öffnungen nach Anspruch 1, **dadurch gekennzeichnet, dass** die zwei Dichtungsringe (5) und (6) durch Stege (7) miteinander verbunden sind.

3. Stopfen zum Abdichten von Öffnungen nach Anspruch 1, **dadurch gekennzeichnet, dass** die Dichtungsringe (5) und (6) durch einen durchgehenden Streifen (7') miteinander verbunden sind, der einen durchgehenden Körper mit den Dichtungsringen (5, 6) bildet.

## Revendications

1. Bouchon d'obturation pour ouvertures situées dans des plaques, conçu en particulier pour obturer des ouvertures créées dans des plaques telles que celles des carrosseries automobiles du type comprenant un corps en forme d'auge (1) doté d'un rabat extérieur périphérique divergent (2) dérivé du collet (3) formé par la forme analogue à une auge du corps et divergeant vers l'extérieur depuis le collet (3) et d'un rabat intérieur périphérique divergent (4), à l'extrémité opposée du collet (3) vers le rabat extérieur (2) et divergeant vers l'extérieur depuis le collet (3), une plaque (8) pouvant être reçue entre les surfaces intérieures des rabats, dans lequel le collet (3) peut être reçu dans une ouverture (9) située dans la plaque (8), et moyennant quoi un premier anneau de matériau de fusion (5), tel que de la colle, est disposé sur l'intérieur du rabat périphérique extérieur (2), afin de fournir une zone d'obturation correspondante sur la surface de la plaque (8) sur laquelle il est appliqué, **caractérisé en ce qu'** un second anneau d'obturation de matériau de fusion (6) est disposé sur l'intérieur du rabat intérieur (4) pour fournir une zone d'obturation correspondante sur la surface de la plaque (8) sur laquelle il est appliqué, afin de permettre l'assemblage du bouchon dans l'ouverture correspondante (9) de la plaque (8) sans contact initial entre le matériau mou des anneaux (5, 6) composés de matériau de fusion et une bavure formée lors du perçage de l'ouverture (9).

2. Bouchon d'obturation pour ouvertures selon la revendication 1, **caractérisé en ce que** les deux anneaux d'obturation (5) et (6) sont liés l'un à l'autre par des nervures (7).

3. Bouchon d'obturation pour ouvertures selon la revendication 1, **caractérisé en ce que** les anneaux d'obturation (5) et (6) sont liés l'un à l'autre par une bande continue (7'), définissant un corps simple continu avec les anneaux d'obturation (5, 6).
